(19) Europäisches Patentamt
European Patent Office
Office européen des brevets

(11) **EP 0 881 508 A1**

(12) **DEMANDE DE BREVET EUROPEEN**

(43) Date de publication:
**02.12.1998 Bulletin 1998/49**

(51) Int. Cl.⁶: **G02B 5/20**, G02B 1/11, G02B 5/28

(21) Numéro de dépôt: 98401282.3

(22) Date de dépôt: **28.05.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.05.1997 FR 9706673**

(71) Demandeur:
**COMMISSARIAT A L'ENERGIE ATOMIQUE**
**75015 Paris Cédex 15 (FR)**

(72) Inventeurs:
• **Chaton, Patrick**
  **38570 Theys (FR)**
• **Dijon, Jean**
  **38800 Champagnier (FR)**

(74) Mandataire: **Moutard, Pascal Jean**
  **c/o Brevatome,**
  **25, rue de Ponthieu**
  **75008 Paris (FR)**

(54) **Filtre passe bas pour la bande U.V. du spectre électromagnétique**

(57)    L'invention a pour objet un dispositif de filtrage optique passe-bas pour bande U.V., comportant :

- un empilement diélectrique (14) assurant une fonction anti-réflectrice pour $\lambda > \lambda_c$, où $\lambda_c$ est une longueur d'onde dite de coupure, inférieure à 300 nm,
- une base métallique (12) assurant une fonction de réflexion pour $\lambda > \lambda_c$.

FIG. 4

EP 0 881 508 A1

## Description

<u>Domaine technique et art antérieur</u>

Le domaine auquel se rapporte l'invention concerne les composants optiques en couches minces. Cette invention intéresse le domaine des systèmes optiques ou optroniques, ainsi que le domaine de l'imagerie en astrophysique.

L'invention permet de réaliser une fonction de filtrage passe-bas. Elle permet d'obtenir une fonction de blocage des longueurs d'ondes au-dessus d'une valeur critique située dans l'ultraviolet et une fonction d'anti-réflexion en-dessous de cette valeur particulière.

La plupart des filtres passe-bas dans le domaine ultraviolet utilisent des empilements de couches minces diélectriques constituées d'une alternance de couches de haut indice de réfraction (notées H) et de bas indice de réfraction (notées B). Cette structure est déposée sur un support en verre (appelé substrat). Elle permet de réaliser une fonction de réjection de certaines longueur d'onde. L'optimum du coefficient de réflexion pour une longueur d'onde $\lambda_0$ est obtenu si les épaisseurs mécaniques des différentes couches suivent les deux règles simples :

$$n_h e_h = \lambda_0/4, \quad n_b e_b = \lambda_0/4 \qquad (1)$$

où $e_h$ et $e_b$ sont respectivement les valeurs des épaisseurs mécaniques des couches H et B. $n_h$ et $n_b$ sont respectivement les valeurs des indices de réfraction des couches H et B à la longueur d'onde $\lambda_0$.

Avec cette règle simple, on peut atteindre des valeurs du coefficient de réflexion des ondes électromagnétiques très proches de 1. Typiquement des valeurs de pertes en transmission de quelques ppm (partie pour million) peuvent être atteintes. La largeur spectrale $\Delta\lambda$ obtenue est directement liée à l'écart d'indice $\Delta n$ entre les couches H et B. Elle peut être approchée par la relation simple :

$$\Delta n / \langle n \rangle = (1/4\pi)\Delta\lambda/\lambda_0$$

où $\langle n \rangle$ représente l'indice moyen de l'empilement et $\lambda_0$ la longueur d'onde centrale.

A l'aide de ces deux propriétés, il est possible de concevoir un empilement dont le coefficient de réflexion est maximum (>90%) dans une grande gamme spectrale (la domaine visible par exemple). Pour cela il suffit de superposer des miroirs diélectriques dont les longueurs d'ondes de centrage $\lambda_0$ sont décalées. On parle alors d'une structure en "miroir décalé".

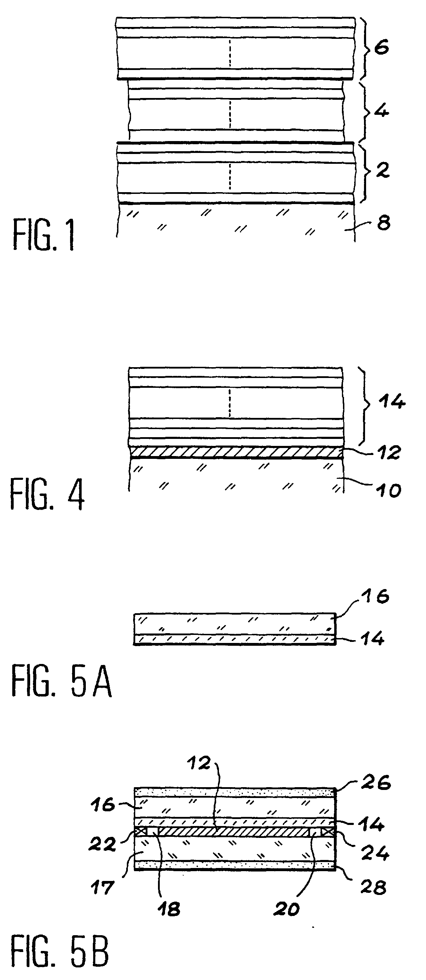

Une telle structure est illustrée sur la figure 1 où les références 2, 4, 6 désignent respectivement un premier miroir de longueur d'onde de centrage $\lambda_{01}$, un ième miroir de longueur d'onde de centrage $\lambda_{0i}$ et un Nième miroir de longueur d'onde de centrage $\lambda_{0N}$. L'ensemble est formé sur un substrat 8.

Grâce à cette structure, il est possible d'obtenir une fonction de filtrage passe-bas car les longueurs d'ondes situées en dehors des bandes spectrales des miroirs ne sont pas réfléchies.

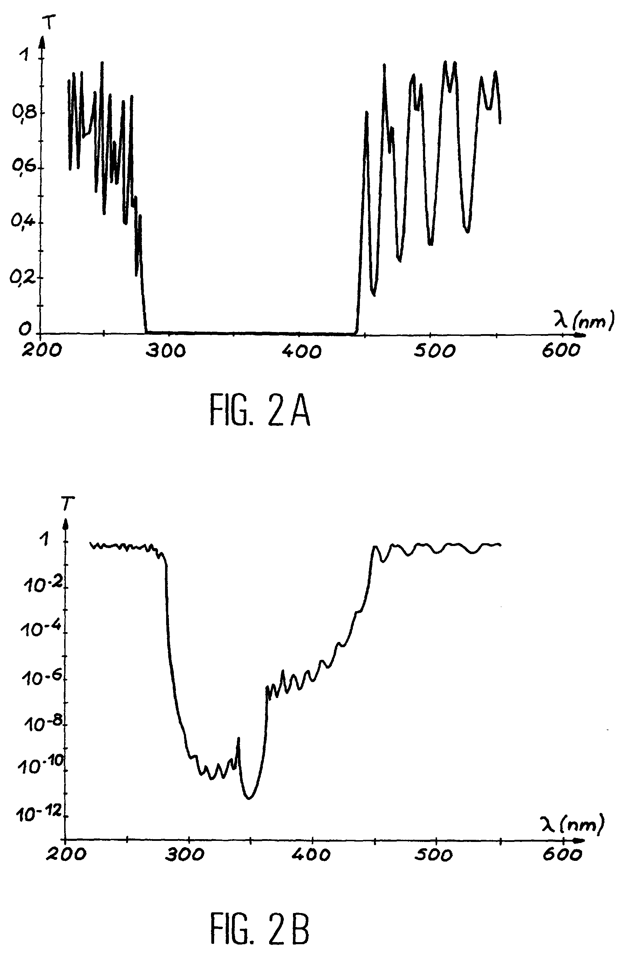

A titre d'exemple, les propriétés optiques en réflexion et en transmission d'une telle structure (avec deux miroirs décalés) sont données sur les figures 2A et 2B.

La figure 2A représente la courbe de transmission (T) en échelle linéaire et la figure 2B représente la courbe de transmission en échelle logarithmique.

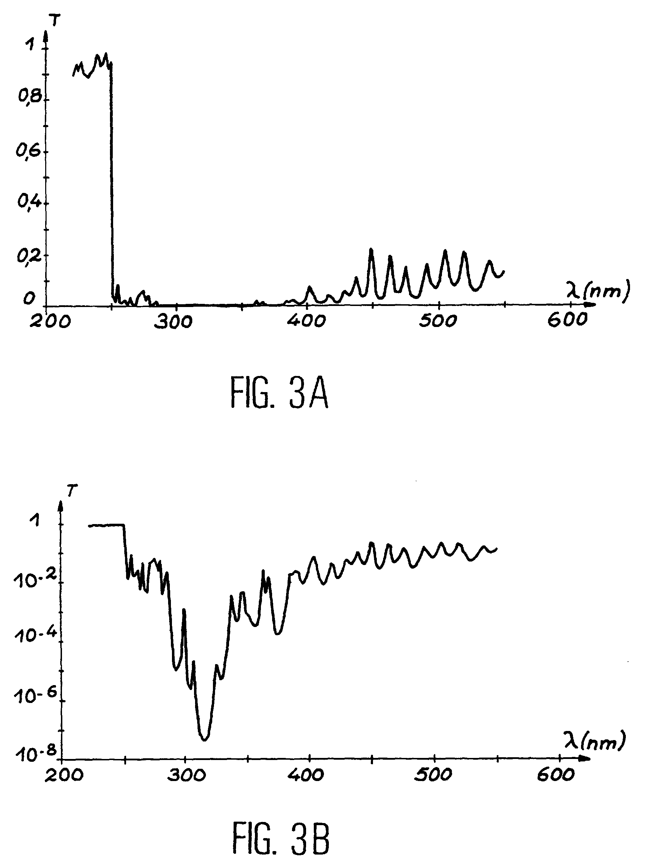

Pour obtenir une fonction passe-bas quasi parfaite, une optimisation mathématique des épaisseurs est envisageable. Les épaisseurs ne vérifient alors plus tout à fait les relations données ci-dessus. Les figures 3A et 3B représentent la courbe de transmission (T) d'un filtre à miroir décalé optimisé, en échelle linéaire et en échelle logarithmique.

Les inconvénients de cette structure "en miroir décalé" résident d'abord dans l'épaisseur totale de l'empilement, si on désire obtenir des valeurs de transmission très faibles dans la zone spectrale de blocage. Ceci peut poser des problèmes de fiabilité mécanique du traitement. Au-delà d'une certaine épaisseur critique, qui dépend du couple de matériaux choisis et de la technique de dépôt, l'empilement peut être irréalisable. Dans le cas présenté ci-dessus (figures 3a et 3B) l'épaisseur totale du filtre atteint 5,35 $\mu$m.

D'autre part, si une fonction de blocage couvrant un très grand domaine spectral (par exemple toutes les longueurs d'ondes au-delà de la longueur d'onde de coupure) n'est pas envisageable avec une structure entièrement basée sur des couches diélectriques.

Il se pose donc le problème d'obtenir des traitements peu épais à très haut niveau de réjection au-delà de la longueur d'onde de coupure. De préférence, le niveau de réjection s'étend dans un grand domaine spectral (jusqu'à l'infrarouge thermique). De préférence encore, la transmission est supérieure à 90% dans la bande U.V.

<u>Exposé de l'invention</u>

La structure proposée consiste à associer un empilement diélectrique classique pour assurer la fonction d'anti-réflexion dans l'U.V. avec une base métallique pour assure la fonction de blocage dans la partie complémentaire du spectre. La longueur d'onde critique à partir de laquelle toutes les ondes sont stoppées est donnée par la fréquence plasmon du métal.

Il faut noter que la structure diélectrique peut contribuer à améliorer les propriétés de réflexion du métal dans son domaine d'opacité ($\lambda > \lambda_c$). On peut obtenir ainsi une fonction porte en transmission et en réflexion.

L'invention a plus précisément pour objet un dispositif de filtrage optique passe-bas pour bande U.V., comportant :

- un empilement diélectrique assurant une fonction anti-réflectrice pour $\lambda > \lambda_c$, ou $\lambda_c$ est une longueur d'onde dite de coupure, inférieure à 300 nm,
- une base métallique assurant une fonction de réflexion pour $\lambda > \lambda_c$.

La combinaison obtenue ne nécessite pas un empilement diélectrique d'épaisseur très importante : une épaisseur comprise entre une centaine de nanomètres et quelques µm est suffisante.

Le métal constitutif de la base peut être un métal alcalin ou alcalino-terreux, qui ont des longueurs d'onde de coupure dans l'ultraviolet.

Un ou plusieurs composants en couches minces, ayant des propriétés antiréflectrices peuvent en outre être déposés sur le dispositif.

L'empilement diélectrique, quant à lui, peut être constitué d'une alternance de couches en MgO ou en $Al_2O_3$ et de couches de $MgF_2$, ou bien d'une alternance de couches en $Al_2O_3$ et de couches en $SiO_2$.

Un empilement constitué d'un alternance de fluorures (par exemple $YF_3$/LiF) présente de très bonnes propriétés de transparence dans l'ultraviolet.

Enfin, le dispositif ou l'empilement diélectrique peut être du type à miroirs décalés.

L'invention a également pour objet un procédé de réalisation d'un dispositif de filtrage optique passe-bas pour bande U.V., comportant les étapes suivantes :

- réalisation d'un empilement diélectrique assurant une fonction antiréflectrice pour $\lambda > \lambda c$, où $\lambda_c$ est une longueur d'onde dite de coupure, inférieure à 300 nm,
- réalisation, sur cet empilement diélectrique, d'une base métallique assurant une fonction de réflexion pour $\lambda > \lambda_c$.

L'invention a également pour objet un procédé de réalisation d'un dispositif de filtrage optique passe-bas pour bande U.V., comportant les étapes suivantes :

a. réalisation, sur un substrat transparent dans U.V., d'une base métallique assurant une fonction réflectrice pour $\lambda > \lambda_c$, où $\lambda_c$ est une longueur d'onde dite de coupure, inférieure à 300 nm,
b. réalisation, sur la base métallique, d'un empilement de couches diélectriques assurant une fonction antiréflectrice pour $\lambda > \lambda_c$.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente une structure de filtre selon l'art antérieur,
- les figures 2A, 2B, 3A, 3B sont des courbes de transmission de dispositifs de l'art antérieur,
- la figure 4 représente une structure de filtre selon l'invention,
- les figures 5A et 5B représentent des étapes de réalisation d'un filtre selon l'invention,
- les figures 6A à 7B sont des courbes de transmission de dispositifs selon l'invention.

Exposé détaillé de modes de réalisation de l'invention

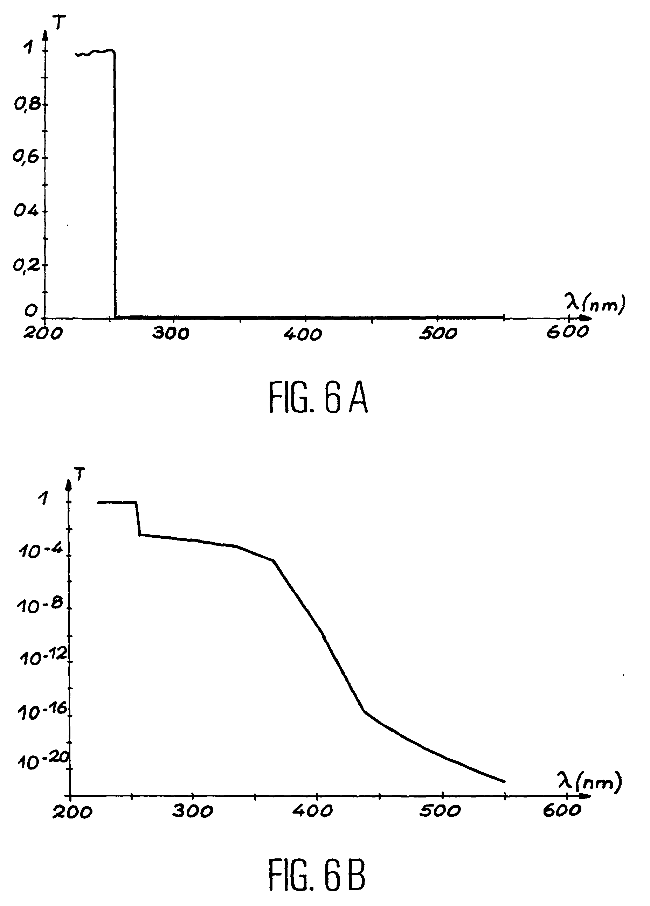

Un exemple de structure selon l'invention est illustré sur la figure 4.

Une structure diélectrique 14 de quelques couches est déposée directement sur une couche 12 de metal. L'empilement diélectrique assure la fonction d'antiréflexion sur la couche mince de métal. La couche de métal assure la fonction de blocage pour les longueurs d'onde supérieure à sa longueur d'onde de coupure. L'épaisseur de la base métallique est ajustable en fonction du niveau de réjection souhaité

Pour le cas particulier de la bande spectrale U.V., on choisit un métal dans une classe de métaux dont la fréquence plasmon correspond à des longueurs d'ondes comprises entre 300 et 250 nm. Cette propriété électronique est vérifiée pour tous métaux alcalins tels que le rubidium, le potassium ou le sodium. Les longueurs d'onde de coupure de certains de ces différents métaux sont données dans le tableau I.

TABLEAU I

| METAUX ALCALINS | ORDRE DE GRANDEUR DE LA LONGUEUR D'ONDE DE COUPURE |
|---|---|
| Rubidium Rb | 255 nm |
| Sodium Na | 300 nm |
| Potassium K | 255 nm |

Pour déplacer la longueur d'onde de coupure on peut utiliser des alcalino-terreux tels que le magnésium ou le calcium.

La valeur exacte de la longueur d'onde de coupure dépend du métal choisi. Pour les alcalins, $\lambda_c < 300$ nm.

L'ensemble de l'empilement repose sur un substrat transparent dans l'U.V. (jusqu'a 200 nm pour de la silice U.V., jusqu'à 150 nm pour des fluorures, $CaF_2$, ou LiF) et éventuellement opaque pour certaines longueurs d'onde supérieures à la longueur d'onde critique.

Selon un exemple de réalisation, une couche de métaux alcalins est déposée sur un substrat transparent dans la bande U.V., par exemple un substrat de silice de type S300 (suprasil). Pour ce type de dépôt des techniques d'évaporation sous vide peuvent être envisagées (évaporation par canons à électrons ou par effet Joule...).

Dans ce cas, il est préférable d'utiliser un porte substrat refroidi en-dessous de la température de fusion du métal à déposer (température de l'azote liquide par exemple).

Une structure de miroir décalé est ensuite déposée sur la couche métallique pour améliorer le coefficient réflexion dans la zone d'opacité du métal.

Pour résoudre le problème de la très basse température de fusion des métaux alcalins, on peut avantageusement utiliser la technique illustrée sur les figures 5A et 5B. La structure de miroir 14 est préalablement déposée sur un substrat 16, par exemple en silice (pour U.V.). L'utilisation d'une cellule de scellement à une température supérieure à la température de fusion du métal alcalin, permet de réaliser la couche de blocage 12 sous la structure de miroir 14, entre le substrat 16 en silice et un second substrat 17 en silice U.V.

A cette fin, des espaceurs 18, 20 peuvent être constitués de pièces indépendantes ou de plots gravés dans la silice U.V. L'étanchéité de l'ensemble est assurée par des joints de scellement 22, 24 (par exemple par une technique de sérigraphie).

On peut avantageusement placer des composants 26, 28 en couches minces de part et d'autre de la cellule de scellement pour améliorer les propriétés en transmission, ou en réjection, du système complet. Par exemple, des couches de traitement antireflet peuvent être réalisées.

On peut pour cela utiliser des couches minces de fluorures (LiF, $YF_3$, $BaF_2$, $CaF_2$, ...) déposées par évaporation sous vide.

A titre d'exemple, une couche mince de rubidium de 2000 nm est réalisée sur un substrat de silice. Une structure diélectrique de dix couches composée d'une alternance de matériau à haut indice noté H et de matériau à bas indice noté B est disposée sur le métal, avec, par exemple, les indices de réfraction suivants :

$$nh=2,1, \; nb=1,4$$

Les ordres de grandeurs de ces indices correspondent respectivement à des matériaux du type MgO (ou $Al_2O_3$) et $MgF_2$. Les indices de réfraction des matériaux en couches minces dépendent des conditions d'élaboration, et les valeurs indiquées ne constituent pas des valeurs de référence. D'autres couples sont possibles tels que $YF_3$/LiF, $Al_2O_3$/$SiO_2$, ... L'emploi de fluorures est préférable en raison des excellentes propriétés de transparence dans l'ultraviolet de ces matériaux.

A l'aide de méthodes numériques classiques, il est possible d'améliorer les propriétés d'antiréflexion du filtre. De telles méthodes sont exposées par exemple dans l'ouvrage de H.A. MacLeod intitulé "Thin film optical filters", Adam Hilger, 1986, p. 19-25. Cette optimisation a été effectuée et les résultats sont portés sur les figures 6A et 6B, qui représentent respectivement les courbes de transmission (T) en échelles linéaires et logarithmiques.

La longueur d'onde de coupure du filtre selon l'invention correspond à la longueur d'onde de coupure du métal alcalin.

La solution proposée par l'invention présente en outre les avantages suivants :

- les propriétés de transmission dans l'U.V. sont très bonnes (>98%),
- l'efficacité de coupure est meilleure que celle des filtres connus, car la transmission résiduelle est presque nulle sur un domaine spectral allant jusqu'à l'infrarouge (le coefficient d'extinction du métal augmente avec la longueur d'onde),
- l'épaisseur totale de l'empilement diélectrique est 2,25 $\mu m$. Ceci est à comparer avec une structure classique qui peut atteindre 5 à 10 $\mu m$ (5,35 $\mu m$ dans l'exemple déjà présenté). D'une manière générale, l'épaisseur totale dépend des couples de matériaux et des conditions d'élaboration, mais reste faible.

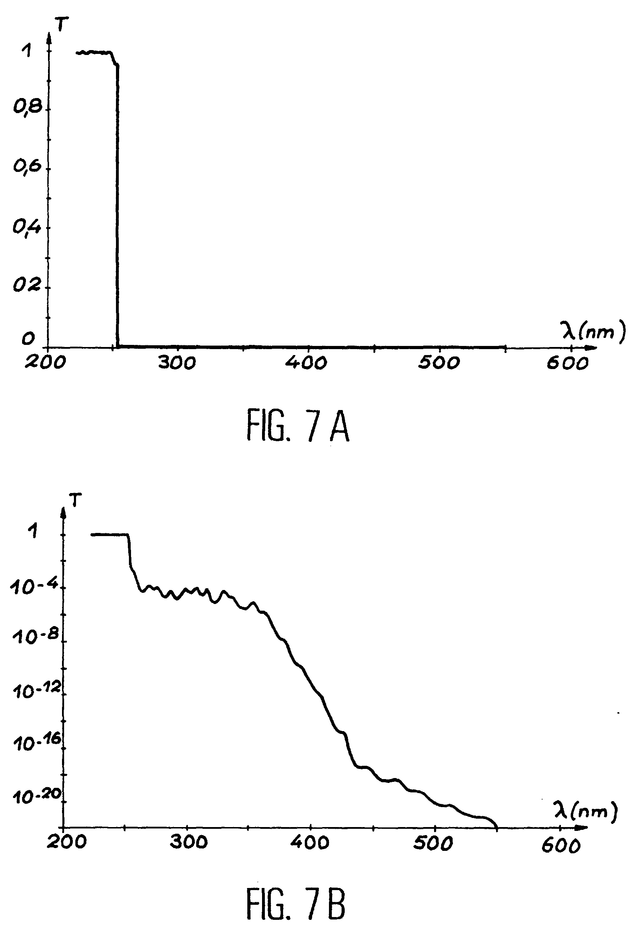

Si on désire améliorer les propriétés de réjection du filtre selon l'invention, une structure diélectrique de type "miroir décalé" peut être avantageusement utilisée. Le coefficient de transmission de cette structure est donné en figures 7A et 7B (courbe de transmission, en échelle linéaire (figure 7A) et logarithmique (figure 7B).

Ce mode de réalisation améliore considérablement les propriétés de coupure de l'invention.

**Revendications**

1. Dispositif de filtrage optique passe-bas pour bande U.V., comportant :

   - un empilement diélectrique (14) assurant une fonction anti-réflectrice pour $\lambda > \lambda_c$, où $h_c$ est une longueur d'onde dite de coupure, inférieure à 300 nm,
   - une base métallique (12) assurant une fonction de réflexion pour $\lambda > \lambda_c$.

2. Dispositif selon la revendication 1, le métal constitutif de la base étant un métal alcalin.

3. Dispositif selon la revendication 1, le métal constitutif de la base étant un metal alcalino-terreux.

4. Dispositif selon l'une des revendications 1 à 3, l'empilement diélectrique et sa base métallique reposant sur un substrat (10) transparent dans l'ultraviolet.

5. Dispositif selon la revendication 4, le substrat étant en outre opaque pour certaines longueurs d'onde supérieures à la longueur d'onde critique $\lambda_c$.

**6.** Dispositif selon l'une des revendications 1 à 5, comportant en outre un ou plusieurs composants (26, 28), en couches minces, ayant des propriétés antiréflectrices.

**7.** Dispositif selon l'une des revendications 1 à 6, l'empilement diélectrique étant constitué d'une alternance de couches en MgO ou en $Al_2O_3$ et de couches de $MgF_2$, ou bien d'une alternance de couches en $Al_2O_3$ et de couches en $SiO_2$.

**8.** Dispositif selon l'une des revendications 1 à 6, l'empilement diélectrique étant constitué d'une alternance de couches formées de fluorures.

**9.** Dispositif selon la revendication 8, l'empilement diélectrique étant constitué d'une alternance de couches en $YF_3$ et de couches en LiF.

**10.** Dispositif selon l'une des revendications 1 à 9, ce dispositif ayant des propriétés antiréflexion optimisées.

**11.** Dispositif selon l'une des revendications 1 à 10, l'empilement diélectrique étant du type à miroirs décalés.

**12.** Procédé de réalisation d'un dispositif de filtrage optique passe-bas pour bande U.V., comportant les étapes suivantes :

- réalisation d'un empilement diélectrique (14) assurant une fonction antiréflectrice pour $\lambda > \lambda_c$, où $\lambda_c$ est une longueur d'onde dite de coupure, inférieure à 300 nm,
- réalisation, sur cet empilement diélectrique, d'une base métalique (12) assurant une fonction de réflexion pour $\lambda > \lambda_c$.

**13.** Procédé de réalisation d'un dispositif de filtrage optique passe-bas pour bande U.V., comportant les étapes suivantes :

a. réalisation, sur un substrat (10) transparent dans l'U.V., d'une base métallique (12) assurant une fonction réflectrice pour $\lambda > \lambda_c$, où $\lambda_c$ est une longueur d'onde dite de coupure, inférieure à 300 nm,
b. réalisation, sur la base métallique, d'un empilement de couches diélectriques assurant une fonction antiréflectrice pour $\lambda > \lambda_c$.

**14.** Procédé selon la revendication 13, le substrat étant sur un porte-substrat refroidi en-dessous de la température de fusion du métal à déposer pour former la base métallique.

**15.** Procédé selon la revendication 12, l'empilement diélectrique étant réalisé sur un substrat (16), la base métallique étant réalisée à l'aide d'une cellule de scellement (17, 18, 20) à la température de fusion du métal constitutif de la base métallique.

FIG. 1

FIG. 4

FIG. 5 A

FIG. 5 B

FIG. 2 A

FIG. 2 B

FIG. 3A

FIG. 3B

FIG. 6 A

FIG. 6 B

FIG. 7 A

FIG. 7 B

**EP 0 881 508 A1**

Office européen
des brevets

**RAPPORT DE RECHERCHE EUROPEENNE**

Numéro de la demande

EP 98 40 1282

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 3 744 870 A (TOMIKI T ET AL) 10 juillet 1973<br>* le document en entier *<br>--- | 1-10, 12-15 | G02B5/20<br>G02B1/11<br>G02B5/28 |
| A | US 3 936 136 A (IKEDA HIDEO ET AL) 3 février 1976<br>* abrégé; figures 1,7,9,10 *<br>* colonne 1, ligne 40 - ligne 44 *<br>* colonne 6, ligne 64 - colonne 7, ligne 19 *<br>--- | 1,6-13 | |
| A | US 5 237 447 A (MARDESICH NICK ET AL) 17 août 1993<br>* abrégé; figures 1,3 *<br>* colonne 1, ligne 18 - colonne 2, ligne 36 *<br>--- | 1-5, 12-14 | |
| A | US 3 015 253 A (W.T. FOREMAN, C.H. SHAW) 2 janvier 1962<br>* le document en entier *<br>--- | 1,12,13 | |
| A | PATENT ABSTRACTS OF JAPAN vol. 016, no. 096 (P-1322), 10 mars 1992 & JP 03 274507 A (COPAL CO LTD), 5 décembre 1991<br>* abrégé *<br>----- | 1,12,13 | **DOMAINES TECHNIQUES RECHERCHES (Int.Cl.6)**<br><br>G02B |

Le présent rapport a été établi pour toutes les revendications

| Lieu de la recherche | Date d'achèvement de la recherche | Examinateur |
|---|---|---|
| LA HAYE | 4 septembre 1998 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)